# EUROPÄISCHE PATENTSCHRIFT

(11) **EP 2 708 740 B1**
(45) Veröffentlichungstag und Bekanntmachung des Hinweises auf die Patenterteilung: **01.03.2017**
(21) Anmeldenummer: 12006503.2
(22) Anmeldetag: 17.09.2012
(51) Int. Cl.: F03D 1/06, F03D 80/40, F03D 80/30

(54) **Windenergieanlagenrotorblatt mit einer elektrischen Heizeinrichtung und einem Blitzableiter**
Wind turbine rotor blade with an electric heating device and a lightning conductor
Pale de rotor d'éolienne avec un dispositif de chauffage électrique et un paratonnerre

(43) Veröffentlichungstag der Anmeldung: 19.03.2014
(73) Patentinhaber: Nordex Energy GmbH, 22419 Hamburg (DE)
(72) Erfinder: Ohlerich, Nick, 18057 Rostock (DE); Schall, Nils-Hendric, 10711 Berlin (DE)
(74) Vertreter: Hauck Patentanwaltspartnerschaft mbB

(56) Entgegenhaltungen:
- WO-A1-00/79128
- WO-A1-2011/096851
- DE-C1- 19 748 716

## Beschreibung

Die Erfindung betrifft ein Windenergieanlagenrotorblatt mit einer elektrischen Heizeinrichtung, die ein blattspitzenseitiges Ende und ein blattwurzelseitiges Ende aufweist und dazu ausgebildet ist, zwischen diesen beiden Enden von einem elektrischen Heizstrom durchflossen zu werden, und einem Blitzableiter, der mit einem Blitzschutzrezeptor im Bereich der Rotorblattspitze verbunden ist.

Wegen ihrer großen Bauhöhe sind Windenergieanlagen häufig von einem Blitzschlag betroffen. Am häufigsten schlägt der Blitz im Bereich der Rotorblattspitze ein, wenn das Rotorblatt schräg oder gerade nach oben weist. Um eine Zerstörung des Rotorblatts durch den Blitzschlag zu verhindern, ist es seit langem bekannt, einen Blitzschutzrezeptor im Bereich der Rotorblattspitze anzuordnen und mit einem Blitzableiter zu verbinden. Der Strom eines in den Blitzschutzrezeptor einschlagenden Blitzes wird dann über den Blitzableiter zur Rotorblattwurzel, von dort in die Nabe, über die Gondel und den Turm zur Erde abgeleitet.

Als Blitzableiter werden in erster Linie Kupferkabel mit relativ großem Querschnitt innerhalb des Rotorblatts angeordnet, insbesondere entlang eines Holms oder Stegs des Rotorblatts.

Aus der Druckschrift EP 1 011 182 B1 ist ein Blitzableiter für ein Rotorblatt einer Windenergieanlage in Form eines Klebebands bekannt geworden, das eine elektrisch leitfähige Schicht aufweist.

Aus dem US-Patent Nr. 8,043,065 B2 ist ein Windenergieanlagenrotorblatt mit speziellem Aufbau bekannt geworden. Bei dem bekannten Rotorblatt wird eine Profilnasenkante von vorgefertigten, aneinander gereihten Segmenten gebildet. Die vorgefertigten Segmente können als integrierte Blitzableiter Kabel oder Drähte enthalten.

Um einer Vereisung der Rotorblätter entgegenzuwirken, werden elektrische Heizeinrichtungen eingesetzt. Diese bestehen aus einem elektrisch leitfähigen Material und werden im Betrieb von einem Heizstrom durchflossen, der zu einer Erwärmung der Heizeinrichtung führt. Derartige Heizeinrichtungen sind zusätzliche, elektrisch leitfähige Strukturen im oder am Rotorblatt, die typischerweise über eine große Länge mehr oder weniger parallel zu dem Blitzableiter angeordnet sind. In diese zusätzlichen, elektrisch leitenden Bauteile werden im Falle von Blitzentladungen über den Blitzableiter erhebliche elektrische Spannungen induziert. Der steile Stromgradient im Blitzableiter erzeugt aufgrund des Maxwell'schen Durchflutungsgesetzes ein stark veränderliches Magnetfeld in der Umgebung des Blitzableiters. Aufgrund des Maxwell'schen Induktionsgesetzes werden in der Folge hohe Spannungen in die elektrische Heizeinrichtung induziert, welche zu Potentialdifferenzen zwischen dem Blitzableiter und der Heizeinrichtung führen. Abhängig vom Stromgradienten und den geometrischen Verhältnissen im Rotorblatt können diese Potentialdifferenzen mehrere Megavolt betragen, sodass es zu Überschlägen zwischen dem Blitzableiter und der elektrischen Heizeinrichtung kommt. Dabei kann es zu einer Beschädigung der Heizeinrichtung oder benachbarter Strukturen des Rotorblatts kommen, bis hin zu einem Totalschaden.

Aus der Druckschrift WO 2011/148049 A1 ist ein Windenergieanlagenrotorblatt bekannt geworden, das eine kastenförmige Tragstruktur mit daran angefügten Profilnasenkanten und Profilhinterkanten aufweist. Im Bereich der Profilnasenkanten gibt es eine elektrische Heizeinrichtung, die mehrere Heizdrähte aufweist. Außerdem gibt es mehrere Blitzableiter, die über die kastenförmige Tragstruktur und die Profilnasenkante verteilt angeordnet sind.

Aus der Druckschrift WO 00/79128 A1 ist ein Windenergieanlagenrotorblatt mit einem etwa mittig in dem Rotorblatt angeordneten Blitzableiter bekannt geworden. Im Bereich der Profilnasenkante gibt es mehrere Heizelemente. Diese sind mit zwei elektrischen Anschlussleitungen verbunden, sodass sie jeweils in einer in der Querschnittsebene liegenden Richtung, also senkrecht zur Rotorblattlängsrichtung, von einem Heizstrom durchflossen werden können. Die elektrischen Anschlussleitungen für die Heizelemente sind über Funkenstrecken mit dem Blitzableiter verbunden. Dadurch soll ein Teil des Blitzstroms durch die elektrischen Anschlussleitungen der Heizelemente abgeführt werden, wobei wegen der Anordnung der beiden Anschlussleitungen die über die Heizelemente hinweg auftretenden Potentialdifferenzen stets Null sein sollen, sodass die Heizelemente nicht beschädigt werden.

Aus der Druckschrift DE 10 2008 006 427 A1 ist ein Windenergieanlagenrotorblatt bekannt geworden, das einen integrierten Erosions-, Blitz- und Vereisungsschutz für die Anströmkante aufweist. Die integrierte Schutzvorrichtung umfasst einen außen angeordneten Erosionsschild, der über elektrische Verbindungen mit einem zentral angeordneten Blitzableiter verbunden ist. Der Vereisungsschutz besteht aus einer Vielzahl von Widerstandsstreifen. Diese sind über elektrische Leitungen mit einer Energiequelle verbunden, sodass sie in Querschnittsrichtung des Rotorblatts von einem elektrischen Heizstrom durchflossen werden können.

Druckschrift DE 197 48 716 C1 beschreibt ein Windenergieanlagenrotorblatt, bei dem im Rotorblatt vorhandene Leiter gleichzeitig als Heizeinrichtung und als Blitzableiter dienen sollen. Bei den Leitern kann es sich beispielsweise um im Rotorblatt vorhandene Kohlenstofffasergurte handeln.

Druckschrift WO 2011/096851 A1 beschreibt ein Windenergieanlagenrotorblatt mit einer elektrischen Heizeinrichtung, die eine Kohlenstoffnanostruktur aufweist. Außerhalb dieser Heizeinrichtung weist das bekannte Rotorblatt eine elektrisch leitfähige Blitzschutzschicht auf, die eine äußere Fläche des Rotorblatts bildet.

Davon ausgehend ist es die Aufgabe der Erfindung, ein Windenergieanlagenrotorblatt mit einer elektrischen Heizeinrichtung und einem Blitzableiter zur Verfügung zu stellen, das einen verbesserten Blitzschutz aufweist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat
- eine flächige, elektrische Heizeinrichtung, die ein blattspitzenseitiges Ende und ein blattwurzelseitiges Ende aufweist und dazu ausgebildet ist, von einem elektrischen Heizstrom durchflossen zu werden, wobei in jedem Querschnitt durch die Heizeinrichtung ein Außenkreis definiert ist, der die Heizeinrichtung mit minimalem Radius vollständig umschließt und einen Außenkreisradius aufweist, und
- einen Blitzableiter, der mit einem Blitzschutzrezeptor im Bereich einer Rotorblattspitze verbunden und dazu ausgebildet ist, den Strom eines in den Blitzschutzrezeptor einschlagenden Blitzes zu einer Rotorblattwurzel abzuleiten, wobei
- der Blitzableiter relativ zu der Heizeinrichtung so angeordnet ist, dass in jedem der Querschnitte innerhalb eines Längsabschnitts der Heizeinrichtung für jeden Punkt der Heizeinrichtung der Abstand zwischen diesem Punkt und einem nächstgelegenen Punkt des Blitzableiters nicht größer ist als der Außenkreisradius.

Das Windenergieanlagenrotorblatt kann für eine Windenergieanlage mit horizontaler Achse bestimmt sein. Es kann eine Länge von beispielsweise 30 Metern oder mehr aufweisen. Es kann aus einem faserverstärktem Kunststoffmaterial gefertigt sein, wobei als Verstärkungsfasern zum Beispiel Glasfasern und/oder Kohlenstofffasern und als Kunststoffmatrix zum Beispiel ein Epoxid- oder Polyesterharz verwendet werden kann. Das Rotorblatt kann aus zwei Halbschalen, insbesondere aus einer druckseitigen und einer saugseitigen Halbschale, zusammengefügt sein. Das Rotorblatt kann ebenso gut aus mehreren Einzelteilen zusammengefügt sein, etwa aus einer endkantenseitigen Schale, einer nasenkantenseitigen Schale und einem mittleren Abschnitt. Auch eine Fertigung mit einer aerodynamischen Hülle aus nur einem Formteil ist möglich. Die Einzelteile können getrennt voneinander gefertigt sein, zum Beispiel in einem Vakuuminfusionsverfahren. Als Tragstruktur kann das Rotorblatt einen oder mehrere Gurte sowie einen oder mehrere Stege aufweisen. Die Gurte können in die jeweiligen Halbschalen integriert sein. Die Stege können ebenfalls aus einem faserverstärkten Kunststoffmaterial gefertigt sein. Das Rotorblatt weist eine Rotorblattspitze und eine Rotorblattwurzel auf sowie eine Profilnasenkante und eine Profilhinterkante. An der Rotorblattwurzel können Anschlussmittel zur Verbindung mit einer Rotornabe vorhanden sein, beispielsweise ein Rotorblattflansch.

Die elektrische Heizeinrichtung weist ein blattspitzenseitiges Ende und ein blattwurzelseitiges Ende auf und wird im Betrieb von einem elektrischen Heizstrom durchflossen. Der Heizstrom kann von einer Stromquelle über geeignete Anschlussleitungen zur Verfügung gestellt werden. Der elektrische Heizstrom kann zum Beispiel vom blattspitzenseitigen Ende zum blattwurzelseitigen Ende der elektrischen Heizeinrichtung fließen oder umgekehrt, das heißt im Wesentlichen in Längsrichtung des Rotorblatts. Die elektrische Heizeinrichtung kann eine Länge von fünf Metern oder mehr oder zehn Metern oder mehr aufweisen. Insbesondere kann sich die elektrische Heizeinrichtung über die gesamte Länge des zu beheizenden Längsabschnitts des Rotorblatts erstrecken.

Die elektrische Heizeinrichtung kann ein Heizelement oder mehrere Heizelemente aufweisen. Die Heizelemente können zum Beispiel einzelne Widerstandsdrähte sein, oder Heizmatten, zum Beispiel aus einem Faserverbundmaterial. Falls mehrere Heizelemente vorhanden sind, können diese insbesondere im Wesentlichen in Rotorblattlängsrichtung verlaufend und nebeneinander und/oder überlappend angeordnet sein. Die elektrische Heizeinrichtung kann sich insbesondere im Bereich der Profilnasenkante des Rotorblatts befinden und entlang der Profilnasenkante verlaufen. Insgesamt ist die Heizeinrichtung flächig ausgebildet, d.h. sie erstreckt sich über eine bestimmte Fläche, deren Gestalt insbesondere einer aerodynamischen Fläche des Rotorblatts gleichen kann. Bei der Verwendung mehrerer Heizelemente kann die insgesamt gebildete Fläche zusammenhängend sein oder Lücken aufweisen. Zum Beispiel können mehrere Heizelemente überlappend oder in einem Abstand voneinander benachbart angeordnet sein.

Der Blitzschutzrezeptor kann aus Metall bestehen und in eine Rotorblattwandung eingesetzt sein. Alternativ kann der Blitzschutzrezeptor die Rotorblattspitze bilden und ein entsprechend geformtes Metallteil aufweisen.

Der Blitzschutzrezeptor ist mit einem Blitzableiter verbunden, sodass der Strom eines in den Blitzschutzrezeptor einschlagenden Blitzes über den Blitzableiter zur Rotorblattwurzel hin abgeleitet werden kann. Damit ist gemeint, dass zumindest ein Großteil des Blitzstroms über den Blitzableiter abgeleitet wird, insbesondere mehr als 80 % oder mehr als 90 % des Blitzstroms. Zu diesem Zweck besteht der Blitzableiter aus einem elektrisch leitfähigen Material, beispielsweise aus Kupfer oder einem anderen Metall. Der Blitzableiter kann so dimensioniert sein, dass der bei einem Blitzschlag maximal zu erwartende Blitzstrom abgeleitet werden kann, ohne dass der Blitzableiter beschädigt wird. Beispielsweise kann der Blitzableiter aus Kupfer bestehen und einen Querschnitt von 50 Quadratmillimetern oder mehr aufweisen.

Zusätzlich zu dem Blitzschutzrezeptor im Bereich der Rotorblattspitze kann das Rotorblatt einen oder mehrere Nebenrezeptoren aufweisen, die über die Länge des Rotorblatts verteilt angeordnet sind. Die Nebenrezeptoren können ebenfalls elektrisch leitend mit dem Blitzableiter verbunden sein. Sie können zum Beispiel einen an der Rotorblattaußenseite befestigten Metallstreifen aufweisen, insbesondere in Richtung der Profiltiefe ausgerichtet.

Die Erfinder haben erkannt, dass eine Beschädigung des Rotorblatts, insbesondere der elektrischen Heizeinrichtung, durch eine besondere geometrische Anordnung des Blitzableiters relativ zu der Heizeinrichtung vermieden werden kann. Auf dem Gebiet des Blitzschutzes ist es üblich, den Blitzableiter in möglichst großem Abstand von jedweder elektrisch leitfähigen Struktur anzuordnen oder eine ausreichend dicke Isolationsschicht zwischen Blitzableiter und elektrisch leitfähiger Struktur vorzusehen, um Überschläge zu vermeiden. Die Erfinder haben erkannt, dass dieser Ansatz im Falle von Windenergierotorblättern mit einer elektrischen Heizeinrichtung nicht zielführend ist, weil die auftretenden Spannungsdifferenzen infolge der großen Abmessungen der Heizeinrichtung sehr groß sind. Der insbesondere nahe der Rotorblattspitze vorhandene Bauraum innerhalb des Rotorblatts ermöglicht keinen ausreichend großen Abstand zwischen Heizeinrichtung und Blitzableiter. Eine zur Vermeidung von Überschlägen ausreichende elektrische Isolation zwischen diesen beiden Elementen ist in der Regel wirtschaftlich nicht sinnvoll.

Eine andere, auf dem Gebiet des Blitzschutzes grundsätzlich bekannte Maßnahme zur Vermeidung von Überschlägen sieht einen Potentialausgleich zwischen dem Blitzableiter und den zusätzlichen, leitfähigen Strukturen vor. Ein solcher Potentialausgleich führt dazu, dass die elektrisch leitend mit dem Blitzableiter verbundene Anordnung im Falle eines Blitzschlags einen Teilblitzstrom ableiten muss. Diesbezüglich haben die Erfinder erkannt, dass elektrische Heizeinrichtungen für Rotorblätter, anders als beispielsweise elektrische Leitungen, wegen ihres relativ hohen ohmschen Widerstands in der Lage sind, einen Teilblitzstrom zerstörungsfrei abzuführen. Dies gilt allerdings zunächst nur für den statischen Fall, in dem sich der Blitzstrom entsprechend den ohmschen Widerständen des Blitzableiters und der elektrischen Heizeinrichtung auf die beiden Strompfade aufteilt. Wegen des vielfach höheren ohmschen Widerstands der Heizeinrichtung im Vergleich zu dem Blitzableiter resultieren in diesem Fall nämlich relativ geringe Teilblitzströme, die über die elektrische Heizeinrichtung abgeführt werden müssen.

Im hochdynamischen Fall eines Blitzeinschlags treten jedoch Stromgradienten von bis zu 200 kA/µs auf. In diesem Fall bestimmen die Reaktanzen, d. h. die komplexen, frequenzabhängigen Widerstände der dem Blitzableiter und der elektrischen Heizeinrichtung innewohnenden Induktivitäten die Stromaufteilung. Diesbezüglich haben die Erfinder erkannt, dass die resultierenden Teilblitzströme auch unter Berücksichtigung der Induktivitäten im Falle einer idealen magnetischen Kopplung zwischen dem Blitzableiter und der elektrischen Heizeinrichtung entsprechend dem statischen Fall, also entsprechend der beteiligten ohmschen Widerstände, erfolgt. Dabei liegt eine ideale magnetische Kopplung vor, wenn die elektrisch leitfähigen Strukturen des Blitzableiters und der elektrischen Heizeinrichtung von denselben magnetischen Flüssen durchsetzt werden. Eine solche ideale Kopplung ist in der Praxis nicht erreichbar. Allerdings ist eine Annäherung an dieses Ziel möglich.

Bei der Erfindung wird die magnetische Kopplung zwischen dem Blitzableiter und der elektrischen Heizeinrichtung dadurch optimiert, dass der Blitzableiter relativ zu der Heizeinrichtung so angeordnet wird, dass - stets betrachtet in einem Querschnitt durch die Heizeinrichtung bzw. das Rotorblatt, also in einer Schnittebene senkrecht zu einer Rotorblattlängsachse - der Abstand zwischen jedem Punkt der Heizeinrichtung und dem Blitzableiter relativ gering ist. Die Erfinder haben festgestellt, dass eine zur Vermeidung von Überschlägen ausreichende magnetische Kopplung dann erzielt werden kann, wenn für jeden Punkt der Heizeinrichtung der Abstand dieses Punkts von einem nächstgelegenen Punkt des Blitzableiters nicht größer ist als der Radius eines Außenkreises, der die Heizeinrichtung mit minimalem Radius vollständig umschließt. Der so definierte Außenkreis ist ein Maß für die Erstreckung der elektrischen Heizeinrichtung in der Querschnittsebene. Dabei umfasst der Außenkreis definitionsgemäß die Heizeinrichtung vollständig, d.h. gegebenenfalls sämtliche Heizelemente der Heizeinrichtung.

Um die magnetische Koppelung weiter zu verbessern, kann der Abstand zwischen jedem Punkt der Heizeinrichtung und einem nächstgelegenen Punkt des Blitzableiters weiter verringert werden, beispielsweise auf 80 % des Außenkreisradius oder weniger, 50 % des Außenkreisradius oder weniger oder 25 % des Außenkreisradius oder weniger.

Um das genannte Abstandskriterium zu verfüllen, kann der Blitzableiter benachbart zu der Heizeinrichtung angeordnet werden. Der Abstand zwischen jedem Punkt der Heizeinrichtung und dem Blitzableiter kann geringer sein als ein festes Maß von beispielsweise 20 cm, 15 cm, 10 cm oder 5 cm.

Die erläuterten Abstandsbetrachtungen gelten stets innerhalb eines Längsabschnitts der Heizeinrichtung. Dabei kann es sich insbesondere um einen Längsabschnitt handeln, in dem Überschläge zwischen Blitzableiter und Heizeinrichtung besonders wahrscheinlich sind, beispielsweise in einem nahe der Rotorblattspitze angeordneten Längsabschnitt der Heizeinrichtung. Der Längsabschnitt kann sich jedoch auch über die gesamte Länge der Heizeinrichtung erstrecken, d. h. von deren blattspitzenseitigem Ende bis zu deren blattwurzelseitigem Ende. Der Längsabschnitt kann eine Länge von 5 m oder mehr, 8 m oder mehr oder sogar 12 m oder mehr aufweisen.

In einer Ausgestaltung ist der Blitzableiter relativ zu der Heizeinrichtung so angeordnet, dass in jedem der Querschnitte innerhalb des Längsabschnitts für jeden Punkt des Blitzableiters der Abstand zwischen diesem Punkt und einem nächstgelegenen Punkt der Heizeinrichtung nicht größer ist als der Außenkreisradius. Dieses zusätzliche Abstandskriterium sieht vor, dass der Blitzableiter nicht über ein gewisses Maß hinaus über die elektrische Heizeinrichtung übersteht, wiederum in einer Querschnittsebene betrachtet. Auch durch diese Maßnahme wird die magnetische Kopplung zwischen den beiden Elementen verbessert.

In einer Ausgestaltung befindet sich der Blitzableiter innerhalb des die Heizeinrichtung umschließenden Außenkreises. Dadurch wird eine besonders kompakte Anordnung erreicht.

In einer Ausgestaltung ist der Blitzableiter flächig ausgebildet. Beispielsweise kann es sich um ein Flachbandkabel oder einen Metallstreifen mit einer gitter- oder gewebeartigen Struktur handeln, beispielsweise aus Kupfer oder Aluminium oder einem sonstigen leitfähigen Material. Beispielsweise kann die Breite des Blitzableiters das 10- oder 20-fache oder mehr seiner Höhe (betrachtet im Querschnitt durch den Blitzableiter) betragen. Der flächig ausgebildete Blitzableiter kann eben oder gekrümmt sein. Bei einer flächigen Ausbildung des Blitzableiters lässt sich die gewünschte Anordnung benachbart zu der ebenfalls flächig ausgebildeten, elektrischen Heizeinrichtung besonders einfach verwirklichen.

In einer Ausgestaltung weist der Blitzableiter eine Vielzahl von Einzelleitern auf, die in einer Fläche angeordnet sind. Auch diese Fläche kann eben oder gekrümmt sein. Die Einzelleiter können beispielsweise Kupferlitzen sein, die in einem Flachbandkabel gebündelt sind. Alternativ können Einzeldrähte mit einem größeren Querschnitt von jeweils beispielsweise einem Quadratmillimeter oder mehr verwendet werden, die in einem Abstand voneinander in dem Rotorblatt angeordnet sind. Die Einzelleiter können von einem elektrisch isolierenden Material umgeben sein. In allen genannten Fällen wird die benötigte Querschnittsfläche des Blitzableiters auf mehrere Einzelleiter aufgeteilt, die in besonders günstiger Weise relativ zu der Heizeinrichtung angeordnet werden können.

In einer Ausgestaltung weist der Blitzableiter in jedem der Querschnitte innerhalb des Längsabschnitts einen gleichmäßigen Abstand von der Heizeinrichtung auf. Durch den gleichmäßigen Abstand wird die gewünschte magnetische Kopplung erreicht Außerdem kann durch den gleichmäßigen Abstand die Fertigung vereinfacht und eine wohldefinierte elektrische Isolation zwischen den beiden Elementen sichergestellt werden. Der Abstand kann innerhalb der einzelnen Querschnitte individuell verschieden und lediglich innerhalb eines betrachteten Querschnitts gleichmäßig sein. Alternativ kann der Abstand in allen betrachteten Querschnitten denselben Wert aufweisen. Der Abstand kann der Dicke der Rotorblattwandung in dem jeweiligen Abschnitt entsprechen.

In einer Ausgestaltung ist zwischen der elektrischen Heizeinrichtung und dem Blitzableiter ein elektrisch isolierendes Material angeordnet. Das elektrisch isolierende Material kann ein Bestandteil der Rotorblattwandung sein, insbesondere das zu dessen Herstellung verwendete, faserverstärkte Kunststoffmaterial. Es kann auch ein zusätzliches Isolationsmaterial zwischen Heizeinrichtung und Blitzableiter angeordnet werden, beispielsweise in Form einer Ummantelung des Blitzableiters. Durch das elektrisch isolierende Material wird der Heizstrom vom Blitzableiter isoliert und zusätzlich Überschlägen zwischen Blitzableiter und elektrischer Heizeinrichtung entgegengewirkt.

Bei der Erfindung ist die Heizeinrichtung an einer Außenseite einer Rotorblattwandung angeordnet. Beispielsweise kann die Heizeinrichtung an der Außenseite einer Rotorblattschale angeordnet, insbesondere aufgeklebt, sein. Gegebenenfalls kann sie an ihrer Außenseite von einer Deckschicht überdeckt sein. Die elektrische Heizeinrichtung kann auch gleich bei Herstellung der Rotorblattwandung in diese integriert werden, zum Beispiel, indem sie bei der Herstellung der Rotorblatthalbschale in einem Vakuuminfusionsverfahren in die entsprechende Form eingelegt wird. Eine Anordnung der Heizeinrichtung an der Außenseite der Rotorblattwandung ist für die angestrebte Enteisungswirkung vorteilhaft.

In einer Ausgestaltung ist der Blitzableiter an einer Innenseite einer Rotorblattwandung angeordnet. Beispielsweise kann der Blitzableiter an der Innenseite einer Rotorblattwandung, beispielsweise einer Rotorblatthalbschale, angeordnet, insbesondere aufgeklebt sein. Er kann zusätzlich durch ein Deckmaterial, etwa eine Lage eines faserverstärkten Kunststoffmaterials, fixiert werden. In Kombination mit einer an der Außenseite der Rotorblattwandung angeordneten Heizeinrichtung kann der Blitzableiter auf der gegenüberliegenden Seite der Rotorblattwandung relativ zu der Heizeinrichtung angeordnet sein, insbesondere erstreckt über die gesamte Breite der Heizeinrichtung innerhalb des Querschnitts. Dadurch wird die gewünschte magnetische Kopplung bei gleichzeitig guter Isolation zwischen Heizeinrichtung und Blitzableiter erreicht.

In einer Ausgestaltung ist der Blitzableiter in eine Rotorblattwandung einlaminiert. Insbesondere kann der Blitzableiter bei Herstellung der Rotorblattwandung, beispielsweise wiederum in Form einer entsprechenden Rotorblatthalbschale, in einem Vakuuminfusionsverfahren gemeinsam mit den übrigen Materialien in die Form eingebracht werden. Bei dieser Fertigung kann eine gesonderte Befestigung des Blitzableiters entfallen. Außerdem wird sichergestellt, dass sich der Blitzableiter an der gewünschten Position befindet und dort hervorragend mechanisch fixiert ist. Eine sichere Befestigung des Blitzableiters ist von großer Bedeutung, weil im Falle eines Blitzschlags große elektromagnetische Kräfte auf ihn wirken.

In einer Ausgestaltung ist der Blitzableiter mit dem blattspitzenseitigen Ende der Heizeinrichtung elektrisch leitend verbunden. Die elektrische Verbindung kann zum Beispiel über eine elektrische Leitung, etwa ein Kabel, hergestellt sein. In diesem Fall kommt es ohne weiteres zu einem Potentialausgleich im Bereich des blattspitzenseitigen Endes der Heizeinrichtung. Ein Teilblitzstrom kann über die Heizeinrichtung abgeleitet werden. Ein unkontrollierter Überschlag zwischen Blitzableiter und blattspitzenseitigem Ende der Heizeinrichtung wird vermieden.

In einer Ausgestaltung ist der Blitzableiter dazu ausgebildet, den Heizstrom für die Heizeinrichtung zu führen. Zu diesem Zweck kann ein von dem blattspitzenseitigen Ende der Heizeinrichtung entfernter, näher an der Rotorblattwurzel angeordneter Punkt des Blitzableiters mit einer Stromquelle verbunden sein, insbesondere über eine geeignete Anschlussleitung. In diesem Fall kann also der Blitzableiter gleichzeitig als Versorgungsleitung für die Heizeinrichtung verwendet werden. Auf eine gesonderte Anschlussleitung, die bis zum blattspitzenseitigen Ende der elektrischen Heizeinrichtung führt, kann verzichtet werden. Dies vereinfacht die Fertigung und verringert zudem die Fehleranfälligkeit des Rotorblatts.

In einer Ausgestaltung ist der Blitzableiter mit dem blattspitzenseitigen Ende der Heizeinrichtung über ein elektrisches Verbindungselement verbunden, das dazu ausgebildet ist, eine elektrische Verbindung nur im Falle eines Blitzschlags herzustellen. Zu diesem Zweck bekannte elektrische Verbindungselemente schließen insbesondere Funkenstrecken und Überspannungsableiter, beispielsweise Varistoren, ein. Die Verwendung eines solchen Verbindungselements stellt sicher, dass im Falle eines Blitzschlags die angestrebte Aufteilung des Blitzstroms auf den Blitzableiter und das elektrische Heizeinrichtung ohne undefinierte Überschläge zustande kommt.

In einer Ausgestaltung ist der Blitzableiter mit dem Erdpotential über ein elektrisches Verbindungselement verbunden, das dazu ausgebildet ist, eine elektrische Verbindung nur im Falle eines Blitzschlags herzustellen. Das elektrische Verbindungselement kann wiederum ein Überspannungsableiter oder auch eine Funkenstrecke sein.

Die Erfindung wird nachfolgend anhand eines in Figuren dargestellten Ausführungsbeispiels näher erläutert. Es zeigen:
- Fig. 1: eine perspektivische Ansicht eines erfindungsgemäßen Windenergieanlagenrotorblatts,
- Fig. 2: ein anderes erfindungsgemäßes Windenergieanlagenrotorblatt im Querschnitt,
- Fig. 3: ein weiteres Beispiel eines erfindungsgemäßen Windenergieanlagenrotorblatts im Querschnitt,
- Fig. 4: noch ein weiteres Beispiel eines erfindungsgemäßen Windenergieanlagenrotorblatts im Querschnitt.

Alle Figuren sind schematisch und vereinfacht. Für die sich entsprechenden Elemente werden in allen Figuren dieselben Bezugszeichen verwendet.

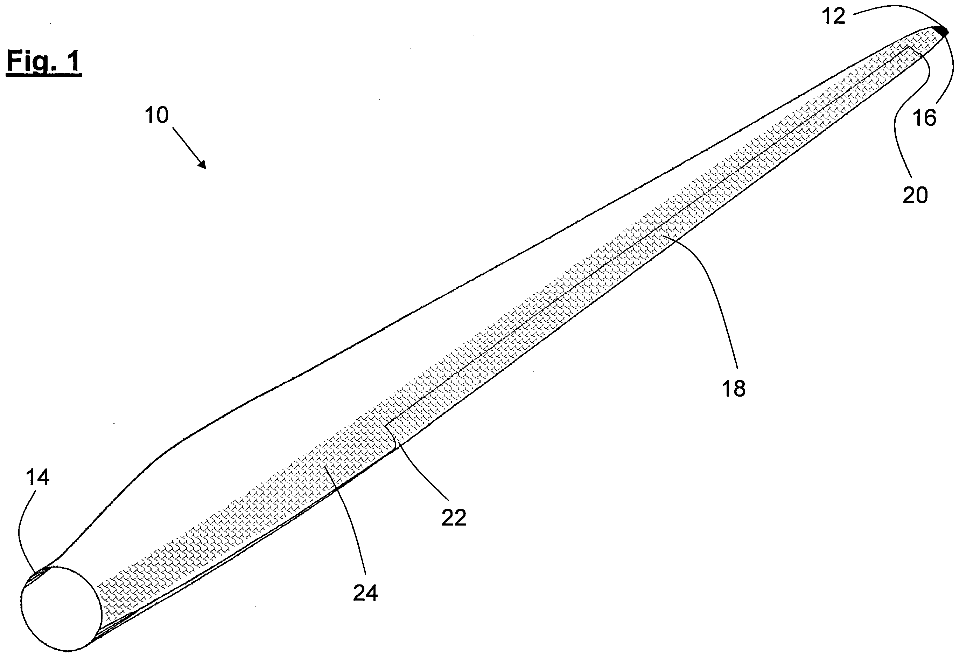

Das in der Fig. 1 gezeigte Windenergieanlagenrotorblatt 10 weist eine Rotorblattspitze 12 und eine Rotorblattwurzel 14 auf. Im Bereich der Rotorblattspitze 12 ist ein Blitzschutzrezeptor 16 angeordnet, der die Rotorblattspitze 12 bildet.

Im Bereich der Profilnasenkante des Rotorblatts 10 ist eine elektrische Heizeinrichtung 18 angeordnet. Sie weist ein blattspitzenseitiges Ende 20 und ein blattwurzelseitiges Ende 22 auf und erstreckt sich über einen Großteil der Länge des Rotorblatts 10, bis nahe an die Rotorblattspitze 12 heran. Im Betrieb wird die elektrische Heizeinrichtung 18 von ihrem blattspitzenseitigen Ende 20 zu ihrem blattwurzelseitigen Ende 22 (oder umgekehrt) von einem Heizstrom durchflossen. Die hierzu erforderlichen elektrischen Anschlussleitungen für die Heizeinrichtung 18 sind in der Figur nicht dargestellt.

Die Fig. 1 zeigt außerdem einen Blitzableiter 24, der aus einem Kupfergewebe besteht und flächig ausgebildet ist. Er erstreckt sich von der Rotorblattwurzel 14 bis zur Rotorblattspitze 12 und ist dort mit dem Blitzschutzrezeptor 16 verbunden. Wie die Figur zeigt, verläuft der Blitzableiter 24 im Wesentlichen benachbart zu der Heizeinrichtung 18, ebenfalls im Bereich der Profilnasenkante.

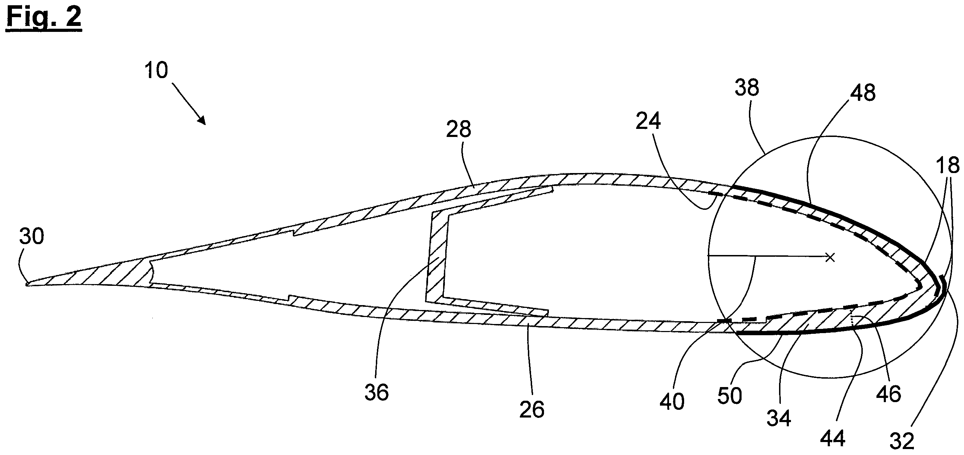

Fig. 2 zeigt weitere Einzelheiten einer möglichen Anordnung des Blitzableiters 24 relativ zu der elektrischen Heizeinrichtung 18. Das im Querschnitt dargestellte Rotorblatt 10 besteht aus zwei Rotorblatthalbschalen, nämlich einer druckseitigen Rotorblatthalbschale 26 und einer saugseitigen Rotorblatthalbschale 28. Die beiden Halbschalen 26, 28 sind im Bereich der Profilhinterkante 30 und im Bereich der Profilnasenkante 32 miteinander verklebt. Gemeinsam bilden sie eine Rotorblattwandung 34, deren Außenseite das aerodynamische Profil des Rotorblatts 10 bestimmt. Zwischen den beiden Halbschalen 26, 28 befindet sich außerdem ein im Profil C-förmiger Steg 36, der einen Teil der Tragstruktur des Rotorblatts 10 bildet.

Die Fig. 2 zeigt einen Querschnitt durch das Rotorblatt 10 innerhalb eines bestimmten Längsabschnitts, in dem der Blitzableiter 24 relativ zu der Heizeinrichtung 18 in der erfindungsgemäßen Weise angeordnet ist. Die Heizeinrichtung 18 besteht aus mehreren Heizelementen aus einem Kohlenstofffasermaterial, nämlich aus einem saugseitigen Heizelement 48 und einem druckseitigen Heizelement 50. Die beiden Heizelemente 48, 50 überlappen sich im Bereich der Profilnasenkante 32. Im Bereich der Überlappung kann eine Isolationsschicht angeordnet sein, mit der die Heizmatten elektrisch voneinander isoliert werden.

Zur Verdeutlichung der besonderen Anordnung ist in die Fig. 2 ein Außenkreis 38 eingezeichnet, der die Heizeinrichtung 18, d.h. beide Heizelemente 48, 50, mit minimalem Radius vollständig einschließt. Dieser Außenkreis 38 ist ein Maß für die Ausdehnung der Heizeinrichtung 18 innerhalb des betrachteten Querschnitts. Er weist einen definierten Außenkreisradius 40 auf. Wie die Figur verdeutlicht, ist der Abstand zwischen jedem beliebigen Punkt der Heizeinrichtung 18 und dem Blitzableiter 24 geringer als der Außenkreisradius 40. Dies ist beispielhaft für den Punkt 44 der Heizeinrichtung 18 eingezeichnet, der sich in einem Abstand 46 vom nächstgelegenen Punkt des Blitzableiters 24 befindet.

Die elektrische Heizeinrichtung 18 ist flächig ausgebildet und mit der Außenseite der Rotorblattwandung 34 verklebt. Die Heizelemente 48, 50 bestehen aus einem Kohlenstofffasermaterial mit einer Dicke von beispielsweise 1 mm oder weniger. Derartige elektrische Heizelemente 48, 50 werden auch als Heizmatten bezeichnet.

Der Blitzableiter 24 ist flächig ausgebildet und besteht aus einem Kupfergewebe. In der Figur ist das Gewebe lediglich vereinfacht durch eine gestrichelte Linie angedeutet.

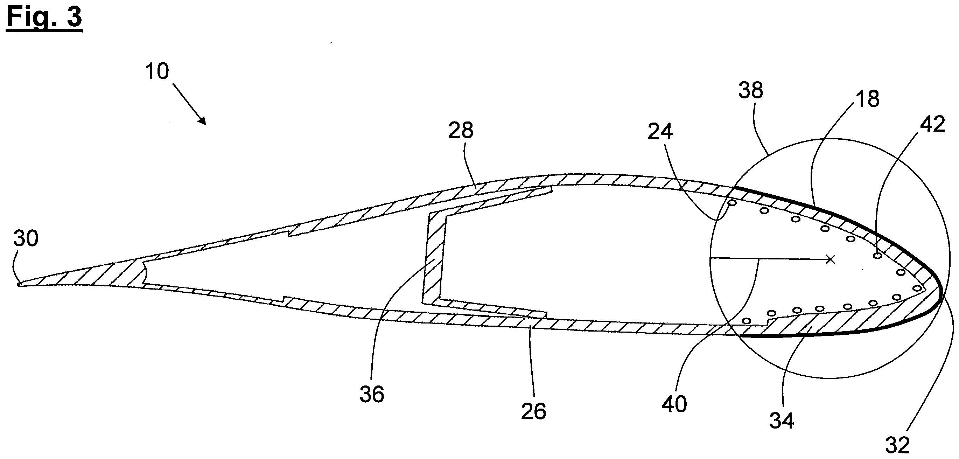

Das weitere Ausführungsbeispiel der Fig. 3 unterscheidet sich von demjenigen der Fig. 2 in der Ausbildung des Blitzableiters 24. Dieser besteht aus einer Vielzahl von Einzelleitern 42, die im Beispiel aus Kupferdrähten mit einem Querschnitt von etwa einem Quadratmillimeter bestehen. Der Querschnitt der Kupferdrähte kann aber auch viel geringer sein. Die Einzelleiter 42 sind in einer Fläche an der Innenseite der Rotorblattwandung 34 und untereinander beabstandet angeordnet. Außerdem zeigt das Beispiel eine Heizeinrichtung 18, die aus nur einer Heizmatte besteht.

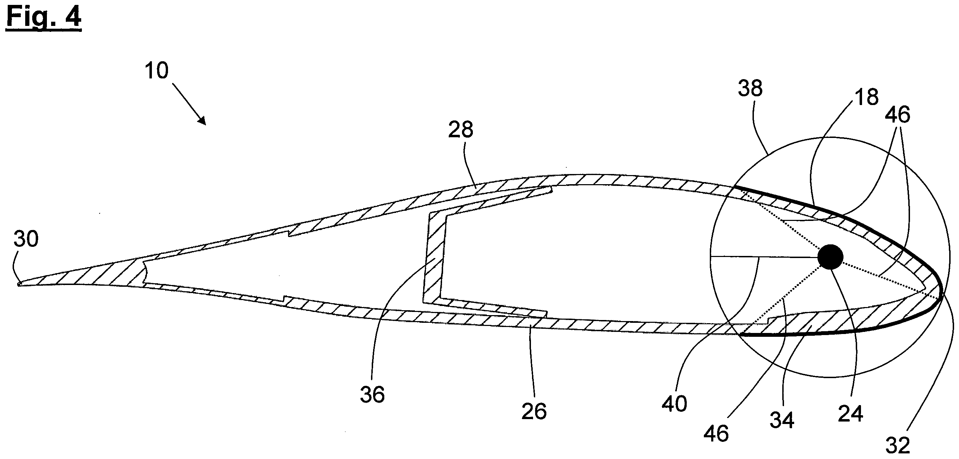

Fig. 4 zeigt ein weiteres Ausführungsbeispiel mit einer aus einer Heizmatte bestehenden Heizeinrichtung 18. Anders als in den vorigen Ausführungsbeispielen ist der Blitzableiter 24 nicht flächig ausgebildet, sondern liegt in Form eines herkömmlichen Kupferleiters mit im Wesentlichen kreisförmigem Querschnitt vor. Auch andere Querschnittsgeometrien sind möglich, zum Beispiel konzentrierte Anordnungen einzelner Kupferlitzen wie bei einem Kabel. Der "konzentrierte" Blitzableiter 24 ist im Mittelpunkt des Außenkreises 38 um die Heizeinrichtung 18 angeordnet. Wie die Figur anhand der eingezeichneten Abstände 46 für drei Punkte der Heizeinrichtung 18 illustriert, ist bei dieser Anordnung der Abstand zwischen Heizeinrichtung 18 und Blitzableiter 24 nirgendwo größer als der Außenkreisradius 40, so dass das erfindungsgemäße Kriterium für eine ausreichende magnetische Kopplung erfüllt ist.

### Liste der verwendete Bezugszeichen:

- 10: Windenergieanlagenrotorblatt
- 12: Rotorblattspitze
- 14: Rotorblattwurzel
- 16: Blitzschutzrezeptor
- 18: Heizeinrichtung
- 20: blattspitzenseitiges Ende der Heizeinrichtung
- 22: blattwurzelseitiges Ende der Heizeinrichtung
- 24: Blitzableiter
- 26: druckseitige Rotorblatthalbschale
- 28: saugseitige Rotorblatthalbschale
- 30: Profilhinterkante
- 32: Profilnasenkante
- 34: Rotorblattwandung
- 36: Steg
- 38: Außenkreis
- 40: Außenkreisradius
- 42: Einzelleiter
- 44: Punkt auf der Heizeinrichtung
- 46: Abstand zum nächstgelegenen Punkt des Blitzableiters
- 48: saugseitiges Heizelement
- 50: druckseitiges Heizelement

## Patentansprüche

1. Windenergieanlagenrotorblatt (10) mit
• einer flächigen, elektrischen Heizeinrichtung (18), die an einer Außenseite einer Rotorblattwandung (34) angeordnet ist und ein blattspitzenseitiges Ende (20) und ein blattwurzelseitiges Ende (22) aufweist und dazu ausgebildet ist, von einem elektrischen Heizstrom durchflossen zu werden, wobei in jedem Querschnitt durch die Heizeinrichtung (18) ein Außenkreis (38) definiert ist, der die Heizeinrichtung (18) mit minimalem Radius vollständig umschließt und einen Außenkreisradius (40) aufweist, und
• einem Blitzableiter (24), der mit einem Blitzschutzrezeptor (16) im Bereich einer Rotorblattspitze (12) verbunden und dazu ausgebildet ist, den Strom eines in den Blitzschutzrezeptor (16) einschlagenden Blitzes zu einer Rotorblattwurzel (14) abzuleiten, **dadurch gekennzeichnet, dass**
• der Blitzableiter (24) relativ zu der Heizeinrichtung (18) so angeordnet ist, dass in jedem der Querschnitte innerhalb eines Längsabschnitts der Heizeinrichtung (18) für jeden Punkt der Heizeinrichtung (18) der Abstand zwischen diesem Punkt und einem nächstgelegenen Punkt des Blitzableiters (24) nicht größer ist als der Außenkreisradius (40).

2. Windenergieanlagenrotorblatt (10) nach Anspruch 1, **dadurch gekennzeichnet, dass** der Blitzableiter (24) relativ zu der Heizeinrichtung (18) so angeordnet ist, dass in jedem der Querschnitte innerhalb des Längsabschnitts für jeden Punkt des Blitzableiters (24) der Abstand zwischen diesem Punkt und einem nächstgelegenen Punkt der Heizeinrichtung (18) nicht größer ist als der Außenkreisradius (40).

3. Windenergieanlagenrotorblatt (10) nach Anspruch 1 oder 2, **dadurch gekennzeichnet, dass** sich der Blitzableiter (24) innerhalb des die Heizeinrichtung (18) umschließenden Außenkreises (38) befindet.

4. Windenergieanlagenrotorblatt (10) nach einem der Ansprüche 1 bis 3, **dadurch gekennzeichnet, dass** der Blitzableiter (24) flächig ausgebildet ist.

5. Windenergieanlagenrotorblatt (10) nach einem der Ansprüche 1 bis 4, **dadurch gekennzeichnet, dass** der Blitzableiter (24) eine Vielzahl von Einzelleitern (42) aufweist, die in einer Fläche angeordnet sind.

6. Windenergieanlagenrotorblatt nach einem der Ansprüche 1 bis 5, **dadurch gekennzeichnet, dass** der Blitzableiter (24) in jedem der Querschnitte innerhalb des Längsabschnitts einen gleichmäßigen Abstand von der Heizeinrichtung (18) aufweist.

7. Windenergieanlagenrotorblatt (10) nach einem der Ansprüche 1 bis 6, **dadurch gekennzeichnet, dass** zwischen der Heizeinrichtung (18) und dem Blitzableiter (24) ein elektrisch isolierendes Material angeordnet ist.

8. Windenergieanlagenrotorblatt (10) nach einem der Ansprüche 1 bis 7, **dadurch gekennzeichnet, dass** der Blitzableiter (24) an einer Innenseite einer Rotorblattwandung (34) angeordnet ist.

9. Windenergieanlagenrotorblatt (10) nach einem der Ansprüche 1 bis 8, **dadurch gekennzeichnet, dass** der Blitzableiter (24) in eine Rotorblattwandung (34) einlaminiert ist.

10. Windenergieanlagenrotorblatt (10) nach einem der Ansprüche 1 bis 9, **dadurch gekennzeichnet, dass** der Blitzableiter (24) mit dem blattspitzenseitigen Ende (20) der Heizeinrichtung (18) elektrisch leitend verbunden ist.

11. Windenergieanlagenrotorblatt (10) nach Anspruch 10, **dadurch gekennzeichnet, dass** der Blitzableiter (24) dazu ausgebildet ist, den Heizstrom für die Heizeinrichtung (18) zu führen.

12. Windenergieanlagenrotorblatt (10) nach einem der Ansprüche 1 bis 11, **dadurch gekennzeichnet, dass** der Blitzableiter (24) mit dem blattspitzenseitigen Ende (20) der Heizeinrichtung (18) über ein elektrisches Verbindungselement verbunden ist, das dazu ausgebildet ist, eine elektrische Verbindung nur im Falle eines Blitzschlags herzustellen.

13. Windenergieanlagenrotorblatt (10) nach einem der Ansprüche 1 bis 12, **dadurch gekennzeichnet, dass** der Blitzableiter (24) mit dem Erdpotential über ein elektrisches Verbindungselement verbunden ist, das dazu ausgebildet ist, eine elektrische Verbindung nur im Falle eines Blitzschlags herzustellen.

## Claims

1. A wind turbine rotor blade (10) comprising:
• a flat, electrical heating device (18) that is arranged on an outer side of a rotor blade wall (34) and has a rotor blade tip-side end (20) and a rotor blade root-side end (22), and is designed for electrical heating current to flow through it, wherein an outer circle (38) is defined in each cross-section of the heating device (18) that entirely encloses the heating device (18) with a minimum radius and has an outer circle radius (40), and
• a lightning conductor (24) that is connected to a lightning protection receptor (16) in the region of a rotor blade tip (12) and is designed to divert the current of lightning striking in the lightning protection receptor (16) toward a rotor blade root (14), **characterized in that**
• the lightning conductor (24) is arranged relative to the heating device (18) such that, for each point of the heating device (18) in each of the cross-sections within a longitudinal section of the heating device (18), the distance between this point and an adjacent point of the lightning conductor (24) is not greater than the outer circle radius (40).

2. The wind turbine rotor blade (10) according to claim 1, **characterized in that** the lightning conductor (24) is arranged relative to the heating device (18) such that, for each point of the lightning conductor (24) in each of the cross-sections within the longitudinal section, the distance between this point and an adjacent point of the heating device (18) is not greater than the outer circle radius (40).

3. The wind turbine rotor blade (10) according to claim 1 or 2, **characterized in that** the lightning conductor (24) is located within the outer circle (38) enclosing the heating device (18).

4. The wind turbine rotor blade (10) according to one of claims 1 to 3, **characterized in that** the lightning conductor (24) is designed flat.

5. The wind turbine rotor blade (10) according to one of claims 1 to 4, **characterized in that** the lightning conductor (24) has a plurality of individual conductors (42) that are arranged in a surface.

6. The wind turbine rotor blade according to one of claims 1 to 5, **characterized in that** the lightning conductor (24) has a uniform distance to the heating device (18) in each of the cross-sections within the longitudinal section.

7. The wind turbine rotor blade (10) according to one of claims 1 to 6, **characterized in that** an electrically insulating material is arranged between the heating device (18) and the lightning conductor (24).

8. The wind turbine rotor blade (10) according to one of claims 1 to 7, **characterized in that** the lightning conductor (24) is arranged on an inner side of a rotor blade wall (34).

9. The wind turbine rotor blade (10) according to one of claims 1 to 8, **characterized in that** the lightning conductor (24) is laminated within a rotor blade wall (34).

10. The wind turbine rotor blade (10) according to one of claims 1 to 9, **characterized in that** the lightning conductor (24) is connected in an electrically conductive manner to the rotor blade tip-side end (20) of the heating device (18).

11. The wind turbine rotor blade (10) according to claim 10, **characterized in that** the lightning conductor (24) is designed to conduct the heating current for the heating device (18).

12. The wind turbine rotor blade (10) according to one of claims 1 to 11, **characterized in that** the lightning conductor (24) is connected to the rotor blade tip-side end (20) of the heating device (18) by an electrical connecting element that is designed to establish an electrical connection only in the event of a lightning strike.

13. The wind turbine rotor blade (10) according to one of claims 1 to 12, **characterized in that** the lightning conductor (24) is connected to the earth potential by an electrical connecting element that is designed to establish an electrical connection only in the event of a lightning strike.

## Revendications

1. Pale de rotor d'éolienne (10), avec
• un dispositif de chauffage (18) électrique plan qui est disposé sur un côté extérieur d'une paroi de pale de rotor et qui présente une extrémité (20) côté pointe de pale et une extrémité (22) côté pied de pale, et qui est constitué pour être parcouru par un courant de chauffage électrique, un cercle extérieur (38) étant défini dans chaque section transversale du dispositif de chauffage (18), qui entoure complètement le dispositif de chauffage (18) avec un rayon minimal et présente un rayon de cercle extérieur (40), et
• un paratonnerre (24) qui est raccordé à un récepteur de protection contre la foudre (16) dans la zone d'une pointe de pale de rotor (12) et qui est constitué pour détourner vers un pied de pale de rotor (14) le courant d'une foudre tombant sur le récepteur de protection contre la foudre (16), **caractérisée en ce que**
• le paratonnerre (24) est disposé par rapport au dispositif de chauffage (18) de telle sorte que, dans chacune des sections transversales, à l'intérieur d'un tronçon longitudinal du dispositif de chauffage (18), pour chaque point du dispositif de chauffage (18), la distance entre ce point et un point le plus proche du paratonnerre (24) n'est pas plus grande que le rayon de cercle extérieur (40).

2. Pale de rotor d'éolienne (10) selon la revendication 1, **caractérisée en ce que** le paratonnerre (24) est disposé par rapport au dispositif de chauffage (18) de telle sorte que, dans chacune des sections transversales, à l'intérieur du tronçon longitudinal, pour chaque point du paratonnerre (24), la distance entre ce point et un point le plus proche du dispositif de chauffage (18) n'est pas plus grande que le rayon de cercle extérieur (40).

3. Pale de rotor d'éolienne (10) selon la revendication 1 ou 2, **caractérisée en ce que** le paratonnerre (24) se trouve à l'intérieur du cercle extérieur (38) entourant le dispositif de chauffage (18).

4. Pale de rotor d'éolienne (10) selon l'une des revendications 1 à 3, **caractérisée en ce que** le paratonnerre (24) est constitué de façon plane.

5. Pale de rotor d'éolienne (10) selon l'une des revendications 1 à 4, **caractérisée en ce que** le paratonnerre (24) présente une pluralité de conducteurs individuels (42) qui sont disposés dans une surface.

6. Pale de rotor d'éolienne (10) selon l'une des revendications 1 à 5, **caractérisée en ce que**, dans chacune des sections transversales à l'intérieur du tronçon longitudinal, le paratonnerre (24) présente une distance uniforme au dispositif de chauffage (18).

7. Pale de rotor d'éolienne (10) selon l'une des revendications 1 à 6, **caractérisée en ce qu'**un matériau électriquement isolant est disposé entre le dispositif de chauffage (18) et le paratonnerre (24).

8. Pale de rotor d'éolienne (10) selon l'une des revendications 1 à 7, **caractérisée en ce que** le paratonnerre (24) est disposé sur un côté intérieur d'une paroi de pale de rotor (34).

9. Pale de rotor d'éolienne (10) selon l'une des revendications 1 à 8, **caractérisée en ce que** le paratonnerre (24) est introduit par laminage dans une paroi de pale de rotor (34).

10. Pale de rotor d'éolienne (10) selon l'une des revendications 1 à 9, **caractérisée en ce que** le paratonnerre (24) est raccordé de façon électriquement conductrice à l'extrémité (20) côté pointe de pale du dispositif de chauffage (18).

11. Pale de rotor d'éolienne (10) selon la revendication 10, **caractérisée en ce que** le paratonnerre (24) est constitué pour transporter le courant de chauffage pour le dispositif de chauffage (18).

12. Pale de rotor d'éolienne (10) selon l'une des revendications 1 à 11, **caractérisée en ce que** le paratonnerre (24) est raccordé à l'extrémité (20) côté pointe de pale du dispositif de chauffage (18) par le biais d'un élément de raccordement électrique qui est constitué pour n'établir un raccordement électrique qu'en cas de foudre.

13. Pale de rotor d'éolienne (10) selon l'une des revendications 1 à 12, **caractérisée en ce que** le paratonnerre (24) est raccordé au potentiel de la terre par le biais d'un élément de raccordement électrique qui est constitué pour n'établir un raccordement électrique qu'en cas de foudre.
